# EUROPEAN PATENT APPLICATION

(11) **EP 4 641 425 A1**
(43) Date of publication of application: **29.10.2025**
(21) Application number: 25172083.5
(22) Date of filing: 23.04.2025
(51) Int. Cl.: G06F 30/10

(54) **MODEL-BASED DEFINITION MANUFACTURING AND INSPECTION SYSTEM INCLUDING DATA MODEL**

(30) Priority: 23.04.2024 US 202418643502
(71) Applicant: Pratt & Whitney Canada Corp., (01BE5) Longueuil, QC J4G 1A1 (CA)
(72) Inventor: MORIN, Philippe, Longueuil, J4G 1A1 (CA); BARON, Alain, Longueuil, J4G 1A1 (CA); LAMARRE, Simon G., Longueuil, J4G 1A1 (CA); WEI, Pengyou, Longueuil, J4G 1A1 (CA); GELINAS, Simon, Longueuil, J4G 1A1 (CA); ROJAS, Fabrizio, Longueuil, J4G 1A1 (CA)
(74) Representative: Dehns

(57) **Abstract**

A computer system (100) includes a controller (102) having a computer readable storage medium having program instructions embodied therewith, the program instructions executable by controller to perform operations including generating (302) a three-dimensional (3D) model of a product (200), extracting (304) data indicative of one or more elements of the product, and assigning a FAE address to the one or more elements. The method further includes generating (306) a grouping tree (204) to organize the extracted elements, each extracted element organized according to the FAE address, and adding (308) product and manufacturing information (PMI) data to one or more of the addressed FAEs in the grouping tree.

## Description

### BACKGROUND

The present disclosure relates to model-based definition manufacturing and inspection, and more particularly, to a data model utilized in a model-based definition manufacturing and inspection system.

In the rapidly evolving field of manufacturing and quality inspection, there is a constant pursuit for methods that enhance efficiency and quality throughout the product lifecycle. This quest for innovation has led to the development and implementation of various technologies aimed at automating and streamlining the processes involved in designing, manufacturing, and inspecting products. One such technology that stands at the forefront of this digital transformation is Model-Based Definition Manufacturing and Inspection (MB-DMI). MB-DMI represents a paradigm shift in how products are brought from concept to market, by integrating digital modeling techniques to support all stages of the product lifecycle. This approach significantly improves the precision and reliability of each step in the lifecycle, from the initial design phase through to manufacturing and final inspection. Particularly, in industries where the complexity and performance of products are critical, such as the aerospace industry, MB-DMI offers a solution to meet stringent quality and efficiency standards.

### BRIEF DESCRIPTION

According to a first aspect, a computer system includes a controller having a computer readable storage medium having program instructions embodied therewith, the program instructions executable by controller to perform operations including generating a three-dimensional (3D) model of a product, extracting data indicative of one or more elements of the product, and assigning a FAE address to the one or more elements. The method further includes generating a grouping tree to organize the extracted elements, each extracted element organized according to the FAE address, and adding product and manufacturing information (PMI) data to one or more of the addressed FAEs in the grouping tree.

Additionally or alternatively, in this or other embodiments, the one or more elements includes a surface of the product.

Additionally or alternatively, in this or other embodiments, the operations further comprise assigning a function code to the extracted element, the function code indicating a purpose of a respective element.

Additionally or alternatively, in this or other embodiments, the FAE address includes a product FAE ID indicating a structural tolerance of the one or more elements.

Additionally or alternatively, in this or other embodiments, the FAE address includes a product FAE ID indicating a structural shape of the one or more elements.

Additionally or alternatively, in this or other embodiments, the FAE address includes a product FAE ID indicating a material type of the one or more elements.

Additionally or alternatively, in this or other embodiments, the FAE address includes a product FAE ID indicating a surface color of the one or more elements.

Additionally or alternatively, in this or other embodiments, the FAE address includes a manufacturing FAE ID indicating at least one type of manufacturing process used to manufacture the element.

Additionally or alternatively, in this or other embodiments, the operations further comprise generating a Model-Based Definition Manufacturing and Inspection (MB-DMI) lifecycle workflow based on each extracted element organized in the grouping tree.

According to another aspect, a method includes generating a three-dimensional (3D) model of a product, extracting data indicative of one or more elements of the product, and assigning a FAE address to the one or more elements. The method further includes generating a grouping tree to organize the extracted elements, each extracted element organized according to the FAE address, and adding product and manufacturing information (PMI) data to one or more of the addressed FAEs in the grouping tree.

Additional features and advantages are realized through the techniques of the present disclosure. Other embodiments and aspects of the disclosure are described in detail herein and are considered a part of the claimed technical concept. For a better understanding of the disclosure with the advantages and the features, refer to the description and to the drawings.

### BRIEF DESCRIPTION OF THE DRAWINGS

For a more complete understanding of this disclosure, reference is now made to the following brief description, taken in connection with the accompanying non-limiting drawings and detailed description, wherein like reference numerals represent like parts:
FIG. 1 illustrates a MB-DMI system according to a non-limiting embodiment of the present disclosure;
FIG. 2 is FAE grouping tree for organizing FAEs associated with a product to be manufactured according to a non-limiting embodiment of the present disclosure;
FIG 3 is a flow diagram illustrating a method of generating a FAE associated with a product to be manufactured according to a non-limiting embodiment of the present disclosure; and
FIG. 4 depicts a data model system for generating one or more model-based DMI lifecycle workflows.

### DETAILED DESCRIPTION

The core of MB-DMI lies in its ability to encapsulate the full spectrum of product information and specifications within digital models, thereby facilitating a more cohesive and automated workflow. This integration not only aids in the seamless transition of data between different stages of the product lifecycle but also ensures that every detail of the product definition is accurately reflected throughout the manufacturing and inspection processes.

A typical MB-DMI system utilizes detailed three-dimensional digital models (e.g., computer-aided design (CAD) drawings) along with advanced software and hardware tools that enable the system to revolutionize traditional manufacturing and inspection processes. The detailed 3D digital models serve as the central repository of all product information, including geometrical shapes, dimensions, tolerances, materials, and manufacturing process requirements. These models can be enriched with annotations and metadata that go beyond simple visual representation to convey explicit manufacturing and inspection information directly, eliminating the need for traditional two dimensional (2D) drawings. This digital thread enables seamless communication and data transfer across all stages of the product lifecycle, from design through manufacturing to inspection and/or repair, ensuring that every team works with the same, up-to-date information.

The advanced software and hardware tools utilized by MB-DMI systems are capable of interpreting and utilizing the data embedded in the 3D models. This includes computer-aided design (CAD) software, computer-aided manufacturing (CAM) systems, and automated inspection equipment, such as Coordinate Measuring Machines (CMMs) and 3D scanners, which can directly read and execute tasks based on the model definitions. Such integration facilitates automated, precise manufacturing and quality inspection processes, significantly reducing errors and inefficiencies while enhancing product quality. Furthermore, MB-DMI systems often incorporate feedback loops, allowing for continuous improvement of both the product and the process based on real-world manufacturing and inspection data. This holistic approach not only streamlines the entire product development cycle but also supports the agile adaptation of designs and processes in response to evolving requirements and technologies. Traditional MB-DMI systems, however, do not map or index together the various data an information associated with the product through its DMI lifecycle.

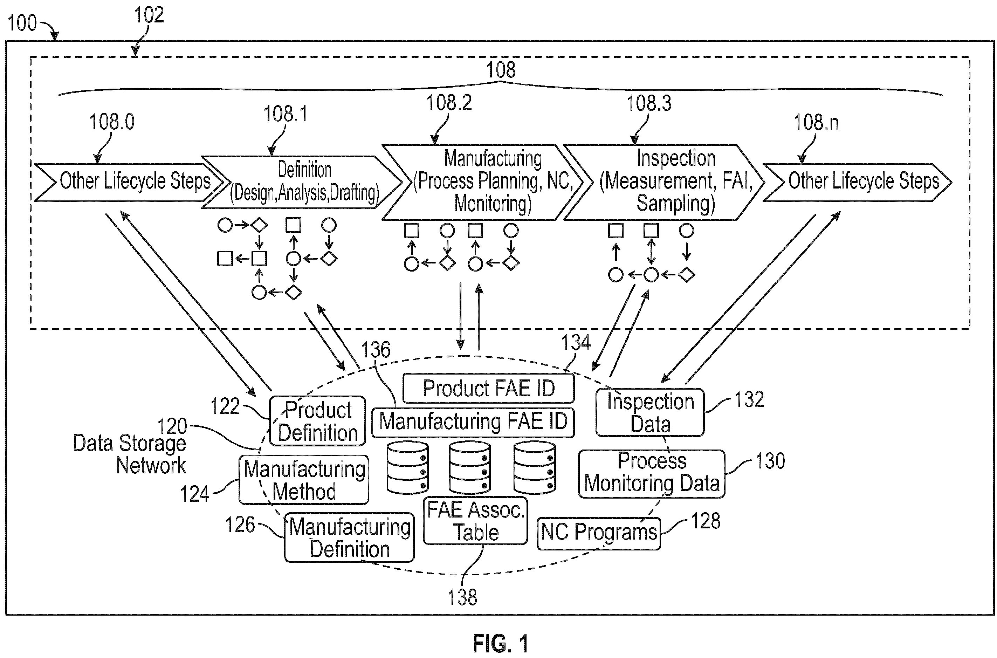

With reference now to FIG. 1, a MB-DMI system 100 is illustrated according to a non-limiting embodiment of the present disclosure. A controller 102 and data storage network 120. The controller 102 can be configured as a hardware controller and memory that stores software and digital tools to facilitate automation and digital model generation.

The data storage network 120 can include, but is not limited to, one or more database servers and/or a cloud computing data storage network. The lifecycle data stored in the data storage network 120 includes, but is not limited to: part level data, Product and Manufacturing Information (PMI) level data, product definitions; manufacturing definitions used to define the types of manufacturing processes to be used to manufacture the product; manufacturing method definitions defining the manufacturing steps at which to perform the manufacturing processes; manufacturing functionally attributed element (FAE) IDs, NC programs defining the specifications and operating parameters of the manufacturing devices and components used to perform the manufacturing processes for manufacturing the product; process monitoring data obtained while monitoring the manufacturing lifecycle step; and inspection data (coordinate machine measurements, infrared (IR) image inspection data, etc. ) obtained after inspecting the resulting physical product manufactured according to the manufacturing lifecycle step;

The data storage network 120 further stores a product FAE information including, but not limited to, FAE product definitions, FAE identification number (ID), a manufacturing FAE ID, and a FAE association table. The product FAE ID is indicative of a unique element or characteristic of a product to be manufactured. For example, the FAE ID can indicate a structural tolerance, structural dimension, structural shape, material type, and/or surface color. The manufacturing FAE ID is indicative of the type of manufacturing process used to achieve a structural characteristic indicated by a given product FAE ID. For example, the manufacturing FAE ID can indicate a polishing process, a cutting process, a curing process, a molding process, etc. The FAE association table links together or indexes the product FAE ID with the manufacturing FAE ID. For example, the FAE association tables are used to map the product FAE ID addresses with other address provided by other platforms or across product definition and stage models, such as the manufacturing FAE ID addresses.

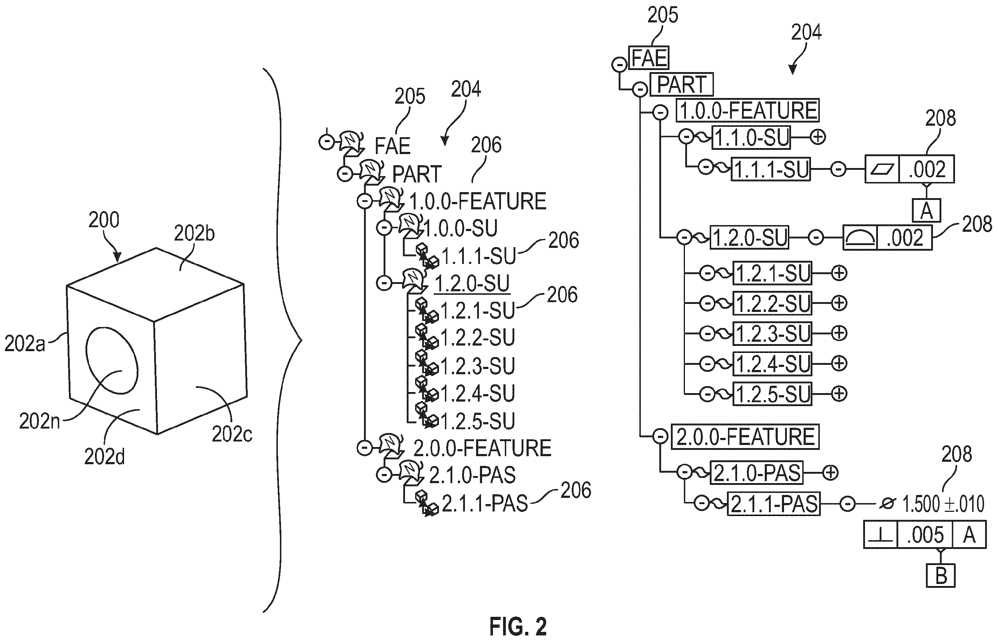

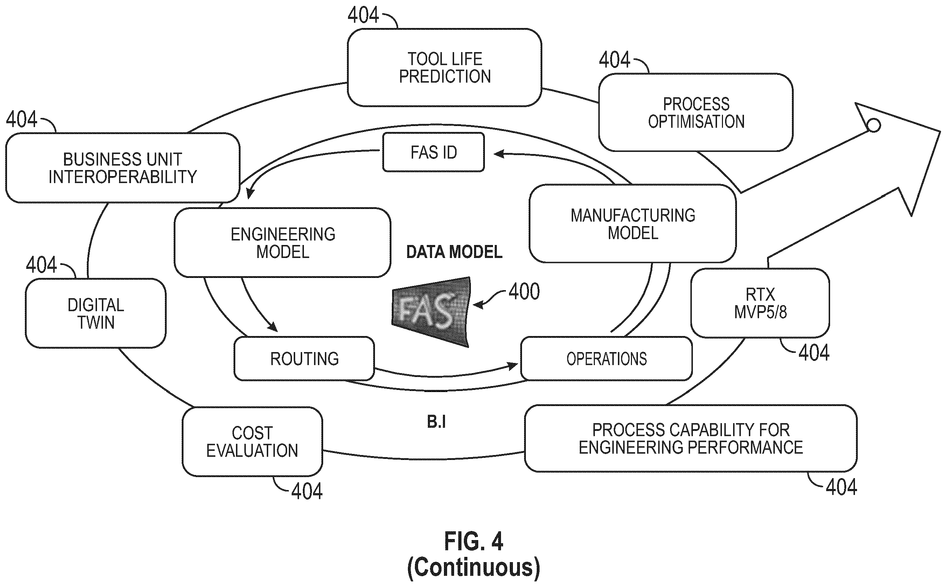

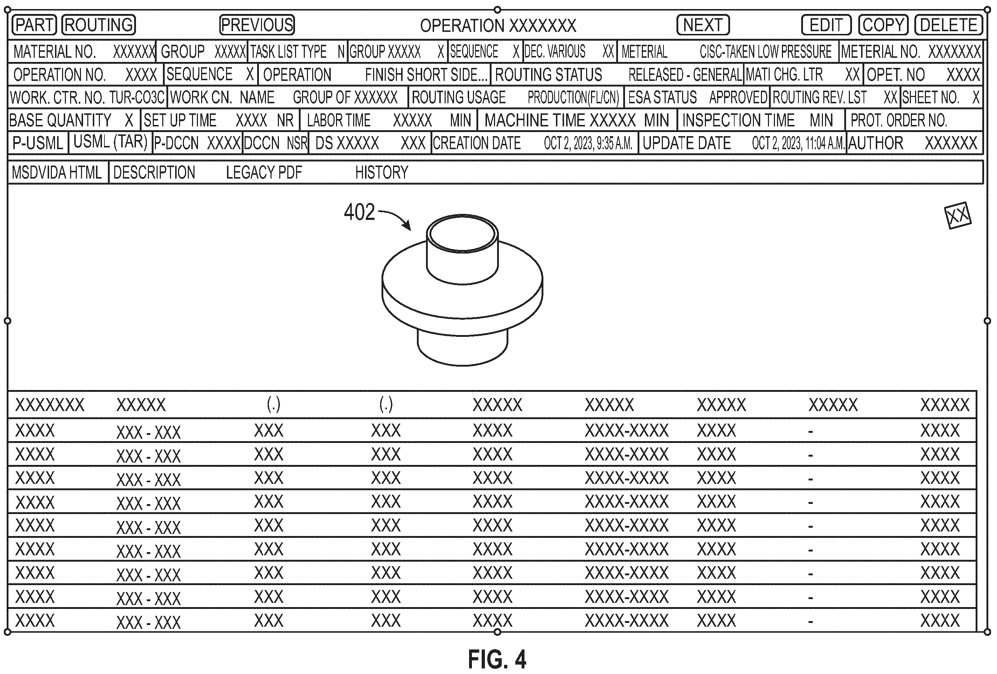

The controller 102 utilizes the information and lifecycle data stored in the data storage network 120 to establish a FAE definition system 104 (see FIG. 2) and a data model system 106 (see FIG. 4) to generate one or more Model-Based DMI lifecycle workflows 108. The lifecycle workflow 108 is defined by a sequence of lifecycle stages 108.0, 108.1, 108.2, 104.3, 108.n (collectively referred to as lifecycle stages 108.0-108.n), which manage a lifecycle of a product to be manufactured.

Turning to FIG. 2, the FAE definition system generates a product definition that defines a product 200 to be manufactured. The product 200 includes, for example, an aircraft engine part. The product definition includes a functionally attributed element, which is a discretized element of the product definition to which a function code, parameter and an address are attributed. The function code can be assigned to each FAE to indicate the purpose of a respective element 202a-202n and therefore further define the product 200. The function parameter can indicate the purpose of the discretized element as part of the product 200. The address is at a minimum an arbitrary code which can be used to uniquely trace the discretized element 202a, 202b, 202c, 202d, 202n (collected referred to as elements 202a-202n) as part of the product 200. According to a non-limiting embodiment, the elements 202a-202n include a product functionally attributed surface (FAS). The FAS is a surface element included as a portion of the product definition corresponding to the product 200 to be manufactured .

As shown in FIG. 2, FAE IDs 205 can be organized in a grouping tree 204. The FAE grouping tree 204 groups the FAE IDs 205 together by feature, into Families, into modules, etc., assigns FAE addresses 206 to each element. This provides an added level of hierarchization for the function or FAE IDs 205. The FAE addresses 206 can also reflect were in the grouping tree 204 a structure the FAE ID 205 resides. Accordingly, the FAE IDs 205 discretize the product into one or more granular elements or sub-components, associate a unique address within the production to the product element, and/or convey the function of a given product element.

The FAE definition system can then augment the FAE grouping tree 204 using PMI data 208 as part of the product definition. The PMI data 208 includes dimensions, tolerances, material specifications, surface finishes, and other manufacturing and inspection requirements, which serve as a set of attributes that are integrated into the FAE IDs 205 within the FAE grouping tree 204. Accordingly, a given FAE ID 205 representing a component or element of a digital model (e.g., CAD image) of a product is enriched with PMI to define how the product should be manufactured and inspected.

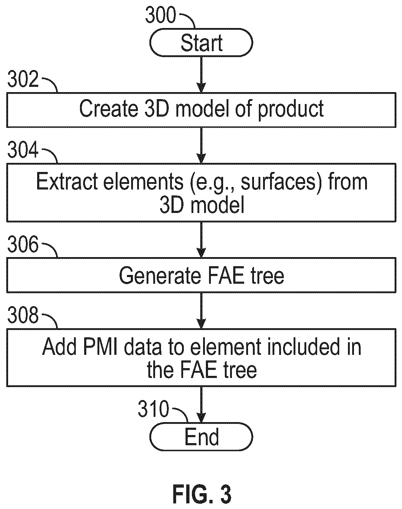

FIG. 3 illustrates a method of generating an FAE according to a non-limiting embodiment of the present disclosure. The method begins at operation 300 and at operation 302 a 3D model of the product is generated. At operation 304, one or more elements (e.g., surfaces) are extract from the product. At operation 306, a grouping tree is generated to organize the extracted elements according to FAE addresses. At operation 308, the PMI is added to one or more of the addressed FAEs in the grouping tree, and the method ends at operation 310.

According to a non-limiting embodiment, the controller 102 converts an augmented FAE definition associated with a given FAE ID from its native creation format to a neutral definition format to extend its reach as far as possible within an enterprise software. The neutral format ensures a continuous digital thread. Once converted, the controller 102 can capture the augmented PMI 208 provided by the FAE definition corresponding to a given FAE ID. For example, the combination of the neutral format and the FAE addresses 206 for organizing the FAE IDs allows for a loose-coupling to pursue digital thread continuity across various platforms, software or lifecycle stages of the product to be manufactured.

Referring now to FIG. 4, the controller 102 can generate the data model 400, which can be used to generate a digital image 402 (e.g., CAD drawing) of a product to be manufacturing. To generate the data model 400, the controller leverages a system of interconnected databases 404 which connect every information related to the definition lifecycle 108.1 stage, the manufacturing lifecycle stage 108.2, and the inspection lifecycle stage 108.3 defining the stage model workflow 108 of a product to be manufactured. According to a non-limiting embodiment, the controller 102 utilizes the FAE definition system to connect the stored lifecycle data directly to one or more FAE IDs.

The data model 400 is defined by multiple types of information including, but not limited to, Product Specific Data, Product Instance Specific Data, and Knowledge Base Data. The Product Specific Data includes, but is not limited to, a part number, FAE structural data, FAE Association tables linking product definitions with manufacturing definitions, routing information, manufacturing steps, product definition, a stage model definition, Process Failure Mode and Effects Analysis (PFMEA) data, engineering stress analysis (ESA), first article inspection (FAI) data. The product Instance Specific Data includes, but is not limited to, data related directly to an instance of a product such as a specific Serial Number of a turbine disc, inspection data, process monitoring data, and routing sign-offs, and routing stamps. The knowledge base data includes, but is not limited to, product specifications; process and manufacturing rules, and best or preferred practice methods.

The controller 102 generates the data model such that all the aforementioned information is connected or mapped. According to a non-limiting embodiment, the controller 102 can implement the data model 400 using native data bases from enterprise systems and software or using self-implemented data bases with platforms such as SQL or others. According to a non-limiting embodiment, elements of the data model 400 may be part of the product definition Technical Data Package (TDP). Some of the information in the data model 400 may be managed with revision control, access control based on Global Trade restrictions, IP, user roles, etc.

The controller 102 generates one or more MB-DMI stage model workflows 108 as described herein by leveraging the grouping tree PMI augmentation data 208 provided by the FAE system and the data availability through the data model 400 to automate or assist workflows 108 that are part of the business activities to support the DMI lifecycle of a given product. In general, these lifecycle workflows 108 rely on querying the data model 400 and a FAE definition with applications that automate or assist these workflows 108. The data model 400 can then be queried and the controller 102 can utilize the corresponding FAE augmented definitions (e.g., FAE IDs 205 with added PMI 208) with applications to automate a one or more lifecycle workflows 108. The various lifecycle workflow automations include, but are not limited to: automation of routing and manufacturing methods generation; automation of numerical control (NC) programming; automation of Inspection plan generation; automation of coordinate measuring machine (CMM) or 3D scanner inspection programming; FAE-based substantiation plans; FAE-based inspection rules; FAE-based machining rules; FAE-based inspection program correlation; and agile (dynamic) inspection sampling from process monitoring data per FAE.

Technical effects and benefits of the present disclosure bridges the gap between organizations, systems and people, by providing a MB-DMI system through which information can be linked to the product definition. This favors and enables multiple cross-organization knowledge sharing, improving dramatically collaboration opportunities such as design for manufacturing. Coupled with digital tools and automation, the MB-DMI system utilizes a data model linked to a FAE definition system, which allows for automating large portions of the workflow needed to support the DMI lifecycle, while also allowing for the implementation of effectively best practices and standards to dramatically raise the effectiveness of the business and the quality of the delivered products.

The terminology used herein is for the purpose of describing particular embodiments only and is not intended to be limiting of the present disclosure. As used herein, the singular forms "a", "an" and "the" are intended to include the plural forms as well, unless the context clearly indicates otherwise. It will be further understood that the terms "comprises" and/or "comprising," when used in this specification, specify the presence of stated features, integers, steps, operations, elements, and/or components, but do not preclude the presence or addition of one or more other features, integers, steps, operations, element components, and/or groups thereof.

While the present disclosure has been described with reference to an exemplary embodiment or embodiments, it will be understood by those skilled in the art that various changes may be made and equivalents may be substituted for elements thereof without departing from the scope of the present disclosure. In addition, many modifications may be made to adapt a particular situation or material to the teachings of the present disclosure without departing from the essential scope thereof. Therefore, it is intended that the present disclosure not be limited to the particular embodiment disclosed as the best mode contemplated for carrying out this present disclosure, but that the present disclosure will include all embodiments falling within the scope of the claims.

## Claims

1. A computer system including a controller having a computer readable storage medium having program instructions embodied therewith, the program instructions executable by the controller to perform operations comprising:
generating a three-dimensional (3D) model of a product;
extracting data indicative of one or more elements of the product;
assigning a functionally attributed element (FAE) address to the one or more elements;
generating a grouping tree to organize the extracted elements, each extracted element organized according to the FAE address; and
adding product and manufacturing information (PMI) data to one or more of the addressed FAEs in the grouping tree.

2. The computer system of claim 1, wherein the one or more elements includes a surface of the product.

3. The computer system of claim 1 or 2, further comprising assigning a function code to the extracted element, the function code indicating a purpose of a respective element.

4. The computer system of any preceding claim, wherein the FAE address includes a product FAE ID indicating a structural tolerance of the one or more elements.

5. The computer system of any preceding claim, wherein the FAE address includes a product FAE ID indicating a structural shape of the one or more elements.

6. The computer system of any preceding claim, wherein the FAE address includes a product FAE ID indicating a material type of the one or more elements.

7. The computer system of any preceding claim, wherein the FAE address includes a product FAE ID indicating a surface color of the one or more elements.

8. The computer system of any preceding claim , wherein the FAE address includes a manufacturing FAE ID indicating at least one type of manufacturing process used to manufacture the element.

9. The computer system of any preceding claim, further comprising generating a Model-Based Definition Manufacturing and Inspection (MB-DMI) lifecycle workflow based on each extracted element organized in the grouping tree.

10. A method comprising:
generating a three-dimensional (3D) model of a product;
extracting data indicative of one or more elements of the product;
assigning a functionally attributed element (FAE) address to the one or more elements;
generating a grouping tree to organize the extracted elements, each extracted element organized according to the FAE address; and
adding product and manufacturing information (PMI) data to one or more of the addressed FAEs in the grouping tree.

11. The method of claim 10, wherein the one or more elements includes a surface of the product.

12. The method of claim 10 or 11, further comprising assigning a function code to the extracted element, the function code indicating a purpose of a respective element.

13. The method of any of claims 10 to 12, wherein the FAE address includes a product FAE ID to indicating at least one of a structural tolerance, structural dimension, structural shape, material type, and a surface color of the one or more elements.

14. The method of any of claims 10 to 13, wherein the FAE address includes a manufacturing FAE ID indicating at least one type of manufacturing process used to manufacture the element.

15. The method of any of claims 10 to 14, further comprising generating a Model-Based Definition Manufacturing and Inspection (MB-DMI) lifecycle workflow based on each extracted element organized in the grouping tree.
